# EUROPEAN PATENT APPLICATION

(11) **EP 3 150 914 A1**
(43) Date of publication of application: **05.04.2017**
(21) Application number: 15460088.6
(22) Date of filing: 30.09.2015
(51) Int. Cl.: F23G 5/02, F23G 5/50, F23G 5/46, C10J 3/00, C10L 5/00

(54) **THE METHOD OF GASIFICATION OF WASTE, IN PARTICULAR HOUSEHOLD WASTE AND THE APPARATUS FOR PERFORMING SUCH A METHOD**

(71) Applicant: Nawrocki, Piotr, 88-100 Inowroclaw (PL)
(72) Inventor: Nawrocki, Piotr, 88-100 Inowroclaw (PL)
(74) Representative: Sielewiesiuk, Jakub

(57) **Abstract**

The invention relates to a process for the gasification of waste, particularly household waste, in an apparatus comprising a gasification system for waste treatment and gasifier (7), comprising the following successive steps:
(a) start-up, (b) loading of waste into the waste processing, (c) processing waste, starting from step (c1) grinding the waste in a system for processing waste, (d) passing treated waste from the processing of waste to the gasifier (7), (e) producing synthesis gas in the gasifier (7), (f) producing electricity and/or heat from the synthesis gas, wherein step (c) comprises a sequence of the steps (c2) drying the waste, (c3) granulation of the dried waste obtained from step (c2), (c4) compression of the granulate produced in step (c3), and wherein step (d) is passing compressed granules of step (c4) to step (e), the interval between steps (c1) - (c4) and step (e) may be any, and excess unused energy produced in step (f) is stored. The invention also comprises an apparatus for the gasification of waste, particularly household waste, particularly for performing the method according to the invention.

## Description

The present invention relates to a process for the gasification of waste, in particular household waste and an apparatus for gasification implementing this method, using the conversion of waste into electricity and/or heat while the waste include wood, paper, cardboard, plastic, organic matter, in particular food, timber, paper, cardboard, plastics, organic matter, in particular food.

The average single-family house with a usable area of 150-200 m2, which does not have electric heating, heat pumps, mechanical ventilation or air conditioning requires approx. 12,5kW energy. The estimated annual consumption of energy for such a house is 1030kWh. Examples electricity consumption by household appliances:
- Dishwasher width 45cm: 0.8kWh,
- Dishwasher width 60cm: 1.0kWh,
- Washing machine with a load 4.5 - 7kg: 0.8-1.05kWh/cycle; the average annual power consumption: 150-210kWh,
- Refrigerator of capacity approx. 200 l, class A+: daily energy consumption 0.6kWh; annual energy consumption of 250kWh,
- Electric kettle: power 2-2.4kW (boiling 1 liter of water takes approx. 3min.),
- Electric stove (ceramic top + oven): connection power 10kW,
- Built-in induction hob, 4 zones: total power approx. 7kW,
- Electric oven: power approx. 3kW,

The synthesis gas (water gas) is a flammable gas formed during the reaction of coal, natural gas or light hydrocarbons with steam in the presence of suitable catalysts. It is a mixture of carbon monoxide (CO) and hydrogen (H2), which may contain substantial amounts of nitrogen. The composition of the synthesis gas (a mixture consisting of hydrogen and nitrogen in a molar ratio 3: 1) consisting of: hydrogen (H2) 74.22% by volume, methane (CH4) 0.76% by volume, nitrogen (N2) 24.74% by volume, argon (Ar) 0.28% by volume. Reaction parameters, which results in the synthesis gas are as follows:
- temperature of 700-900°C;
- Pressure 3-4MPa;
- catalyst Ni on K₂O/Al₂O₃; 2-3-fold excess of steam relative to the stoichiometric amount.

The landfills in Poland receive annually about 13mln tons of municipal solid waste. The waste is hydrogen in approx. 6% by weight. Thus, the hydrogen content in municipal waste is estimated at 780,000 tonnes. 122kJ (33,8kWh) of thermal energy is obtained from the combustion of 1 kg of hydrogen. Therefore, the energy potential of waste hydrogen is 26,364,000MWh.

Under the current state of the art, the best solution, economically and ecologically, is the use of molecular waste recycling process, which occurs in the synthesis process in the temperatures 1300-1600°C. Depending on the composition of waste and associated requirements of efficient distribution and optimisation of the composition of the resulting synthesis gas for the energy use, it is possible to control the process parameters (temperature, conditions of catalyst), and to obtain a gas of the desired composition and the contents of each ingredients, e.g. the following composition: - 10-55% hydrogen, H2; - 5-40% methane, CH4; - other hydrocarbons (ethene, propene, butene) 0-40%; - carbon monoxide CO 0-20%; - 0.5-25% carbon dioxide. That is how the gas is called synthesis gas. In the case of synthesis gas 8MJ energy is contained in a kilogram of waste is converted into 24MJ of available energy, as by molecular recycling of 1kg of waste turns into 2m³ a synthesis gas with a calorific value of about 12MJ/m³. Depending on the composition of materials and process parameters this value can be modeled within certain limits. Depending on the composition of the feed material in the gasification process has not more than 5% of the solid residue (ash).

Publication US20090064581 A1 discloses expanded and multi-device gasification system of waste, working in continuous mode, in which the pre-screened and/or crushed waste is directed to the heating module and further preheated get to the gasifier, in which the process of melting waste and carrying it into the synthesis gas at a temperature of approx. 1600°C. The resulting synthesis gas from the gasifier is led through a series of devices in which it is cooled, dedusted and filtered off the solid impurities and purified chemically and then redirected to current generator, and the cooled and purified residue goes back into circulation.

In another publication, US200501154778 A1 an extensive gasification system is presented, which comprises at least one chamber for the process of gasification and combustion chamber together with a separate control room.

Thus, there is a need to develop a simple method and a device that supports such a method, preferably for use in a household, by which to transform the useless and harmful to the environment waste into electricity and heat in an energy saving way.

The present invention relates to a process for the gasification of waste, particularly household waste, in an apparatus comprising a gasification system for waste treatment and gasifier, comprising the following successive steps:
(a) start-up,(b)
   loading of waste into the waste processing,(c)
   processing waste, starting from (c1) grinding the waste in a system for processing waste,(d)
   passing treated waste from the processing of waste to the gasifier,(e)
   producing synthesis gas in the gasifier,(f)
   producing electricity and/or heat from the synthesis gas,
   characterised in that
   step (c) comprises a sequence of steps
   (c2) drying the waste,
   (c3) granulation of the dried waste obtained from step (c2),with producing granules.(c4)
compression of the granulate produced in step (c3) wherein step (d) is passing compressed granules of step (c4) to step (e), the interval between steps (c1) - (4) and step (e) may be any, and excess unused energy produced in step (f) is stored.

Preferably, the waste disposed includes wood, paper, cardboard, plastics, organic matter, in particular food.

Preferably, after the execution of step (e), the transfer of the produced syngas for power generation plants and/or heat, preferably a power generator and/or boiler.

Preferably, upon completion of step (f) the device is switched off.

In the preferred embodiment of the invention the residue from step (e) as a solid, in particular ash, and gaseous form is discharged outside the system by a dedicated ventilation system.

Preferably, the unused excess energy produced in step (f) is stored in at least one battery constituting an external device and/or piece of equipment.

Preferably, the compression step (c3) is carried out under the pressure of 0.3 - 8MPa, preferably in the range of 0.3 - 4 MPa.

Preferably, the time interval between the step (c4) and step (e) is arbitrary.

The invention also comprises an apparatus for the gasification of waste, particularly household waste, particularly for performing the method according to the invention, comprising:
- A charge material feeding unit,
- A system for processing waste
- A module of the electric panel, to aid the start-up, the control process of gasification and energy storage,
- A gasifier, ash receiver and power generator and/or boiler,

characterised in that it comprises at least one battery for storing unused energy produced in the gasifier.
wherein the waste processing system includes a dryer and a compressor, used for the granulation and compressing the waste.

Preferably, the waste processing system includes shredder for pre-shredding of waste.

Preferably, the device according to the invention has a battery of variable capacity.

In the present invention the compression, granulation and drying processes are carried out independently of the gasification process. Thanks to this, the waste decomposition process is slowed down, and there is no need of immediate gasification, unlike previously known processes which, due to the risk of adverse biological-chemical process are carried out continuously. Moreover, the present invention saves energy by storing energy generated and unused.

The invention will be described in detail below, with a presentation of preferred embodiments and with reference to the drawings, in which:
Fig. 1 shows a block diagram of a waste gasification method according to the invention,

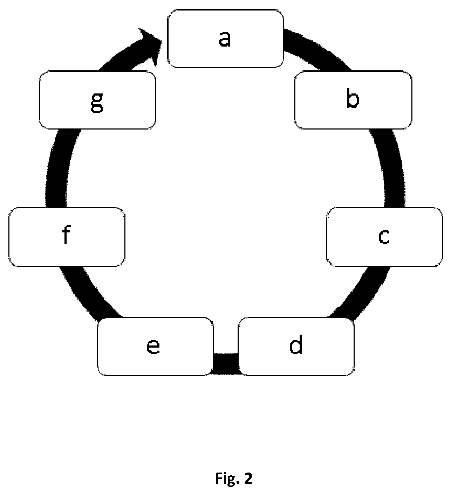

Fig. 2 shows a block diagram of a waste gasification method according to the invention,
Fig. 3 shows a design of an apparatus for the gasification in accordance with the invention in viewa) front and b) side of the device, and
Fig. 4 shows an exemplary construction of a device for gasification in accordance with the invention, with the increased capacity of the battery.

### Moreover, the figure uses the following indications:

1 - material feed module; 2 - electrical panel unit to assist the start of the gasification device and gasification process control and storage of surplus energy; 3 - shredder; 4 - dryer; 5 - compressor; 6 feeder/granules tray; 7 - gasifier; 8 - ash receiver; 9 - power generator, 10 - battery.

### Example 1 - gasification method according to the invention

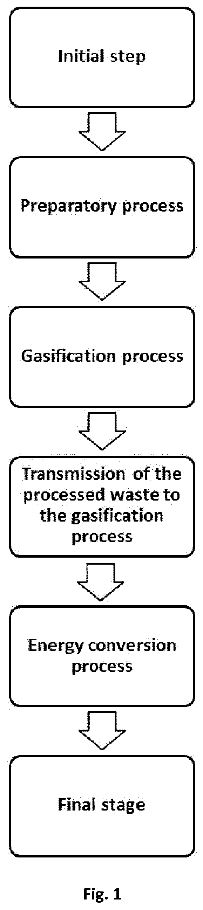

A method of gasification in accordance with the invention proceeds in accordance with the flowchart shown in Fig. 1 and Fig. , and comprises the following consecutive steps:
- the initial step which comprises:
   (a) device start-up and collecting the electrical power required for the initial gasification device start-up with an additional source of energy, which is the module electrical system of the panel 2 - further, the device uses the energy produced by the gasifier 7, and then,
   (b) introduction of household waste - consisting of wood, paper, cardboard, plastics and food remains - to the material feed module 1,
- preparatory process, which involves:
   (c) processing waste, which starts with the fragmentation of waste step (c1), including the preliminary separation of waste in the grinder 3 and comprises the sequential processes of the waste processing system:
      (c2) drying the shredded waste in the drier 4 and the sweeping waste into the compressor 5, which the following sequential processes occur in:
         (c3) granulating the waste dried in step (c1), and
         (c4) the compression, at a pressure of 4 MPa, to obtain fine granules with a 3-fold greater density relative to the density of the output of the loaded waste. and:
- (d) transmission of the processed waste from the waste processing system to the gasifier (7), consisting in an automatic transport of compressed granules of step (c3) through the reservoir 6, to the gasifier 7, wherein the gasification process is started.
- gasification process occurring in the gasifier 7, in which the following thermal treatment of compressed granulate is done, leading to:
   e) forming a synthesis gas by gasification of the compressed granules, and
      next passing of synthesis gas as fuel to produce energy for power generator 9 and/or the boiler in order to produce electricity and/or hot water, while the residue in solid form (prepared ash) is discharged outside the system, respectively collecting the ash in the ash receiver 8, positioned directly under the gasifier 7, and the residual gas is discharged through a dedicated ventilation channel.

It is not necessary immediately after processes of drying , granulation and compression carried out sequentially in step (c) to carry out the process of gas synthesis in the gasifier 7, since as a result of these processes reduced degradation of waste is achieved. Therefore the process can be carried out in a gasification unit discontinuously, intermittently, wherein the waste from the individual steps (c1) - (c4), in the processing step (c), can be transferred to the gasifier 7, i.e. waste can be disposed between the grinder 3, the dryer 4, the compressor 5 and the granules feeder 6, depending on the amount and type of waste. To fully utilize the available space, all of the above elements of the system can serve as a warehouse. With less waste, in particular when the waste is organic, they are rapidly and completely processed in the system for processing waste, passing through all the modules of the system for processing waste and stopping in the compressed form of dried granules before the gasifier 7, in the granules tray 6. The more processed the waste, i.e. the more compressed and dry, the longer the granules may wait for processing. For larger quantities of waste, after filling the material feed module 1 and the compressor 5, it is permissible, in particular when the waste is not organic, to store it also in the dryer 4 and the shredder 3. For hygienic reasons it is best, however, that the waste passes the drying process in the dryer 4 before the shutdown operation. Hence, waste should stay in a shredder 3 only for a short time and if untreated waste is present in the shredder 3, the device signals the need for processing of at least part of the waste. In the case of waste paper and plastic unprocessed waste can be stored longer.

### Then,

- process of energy conversion in which:
   (f) electricity and/or thermal energy is produced and thus produced energy is transfered to the energy receiver. Furthermore, it stores the surplus energy in the battery 10, which constitutes part of the gasification device. Optionally, the gasification apparatus may have more batteries. Alternatively, energy can be stored in one or more external batteries.
- final stage which comprises emptying the ash receiver 8 and the separation of raw material, not suitable for the production of synthesis gas, completion of the gasification process. The device then switches off. Alternatively, the cycle is repeated.

The gasification process is carried out in a controlled atmosphere. The process is characterised by the equivalence ratio (ER), which provides the ratio between the amount of oxygen involved in the process of thermal oxidation of waste, and volume of oxygen required for stoichiometric oxidation of carbon. It is one of the most important operating parameters of units for transforming waste into usable gasification energy. Equivalence ratio largely determines the composition of synthesis gas produced in the gasification of waste in the plasma (including tar) therefore the package of chemical energy contained in the gas.

The composition and amount of syngas, and hence the amount of energy produced depends primarily on the type of feed material.

### Example 2 - gasification device according to the invention

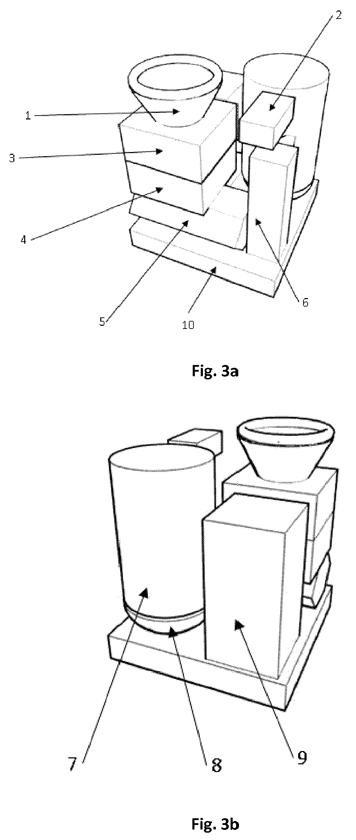

The design of the gasification device according to the invention is shown in Figures 3a and 3b. The device consists of a material feed module 1 into which the waste to be processed is fed and a system for waste treatment comprising a shredder 3 and a dryer 4 connected to it and a compressor 5. The shredded and pre-dried waste is subjected to the granulation and compression at elevated pressures in the compressor 5. The compressor 5 is connected to the granules tray 6, connecting the compressor 5 directly with the gasifier 7. Below the gasifier 7 there is an ash receiver 8. The initial start-up of the device and gasification process control and control of the storage of surplus energy is done by means of the electrical panel unit 2.

The gas generator 7 is connected to a generator 9, generating power from synthesis gas supplied to it. Optionally, the gasification device also includes a boiler. The gasification device has a battery 10 for collecting the surplus generated electric energy. Optionally, the device has more than one battery. Alternatively, external batteries are linked to the device.

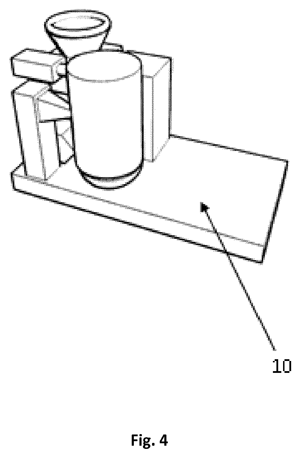

Optionally, the device has a battery 10 of a variable capacity to increase the storage capacity of power generated. An example of such a construction is shown in Fig. 4.

The device with its size adapted to the needs of an individual user in its design and operation uses the solutions to obtain high-value energy from waste in and efficient and environmentally friendly way. It converts non-recyclable waste into energy produced at the place of its origin.

Characteristics of waste gasification device:
- Simple structure,
- Parameters enabling installation in any house,
- Possibility to accumulate the energy produced in the cells,
- Disposing of waste where it is produced,
- Eliminates 95% of waste disposal necessity,
- Produces renewable energy,
- Reduces dependence on energy from fossil fuels,
- Reduces greenhouse gas emissions,
- Eliminates the fees for waste storage,
- Reduces energy bills.

## Claims

1. A process for the gasification of waste, particularly household waste, in an apparatus comprising a gasification system for waste treatment and gas generator (7), comprising the following successive steps:
(a) start-up, loading of waste into the waste processing, processing waste, starting from step (c1) shredding the waste in a system for processing waste,(d) passing treated waste from the processing of waste to the gasifier (7),
(e) producing synthesis gas in the gasifier (7),
(f) producing electricity and/or heat from the synthesis gas,
**characterised in that**
step (c) comprises a sequence of steps
(c2) drying the waste,
(c3) granulation of the dried waste obtained from step (c2), compression of the granulate produced in step (c3)
wherein step (d) is passing compressed granules of step (c4) to step (e), the interval between steps (c1) - (4) and step (e) may be any, and excess unused energy produced in step (f) is stored.

2. Method according to claim 1, **characterised in that** the waste disposed includes wood, paper, cardboard, plastics, organic matter, in particular food.

3. Method according to claim 1 or 2, **characterised in that** after the execution of step (e), the transfer of the produced syngas for power generation plants and/or heat, preferably a power generator and/or boiler.

4. Method according to any one of the preceding claims 1 to 3, **characterised in that** after the performance of step (f) the device is switched off.

5. Method according to any one of the preceding claims 1 to 4, **characterised in that** the residue from step (e) as a solid, in particular ash, and gaseous is discharged outside the system by a dedicated ventilation system.

6. Method according to any one of the preceding claims 1 to 5, **characterised in that** the unused excess energy produced in step (f) is stored in at least one battery constituting an external device and/or piece of equipment.

7. Method according to any one of the preceding claims 1 to 6, **characterised in that** the compression in step (c3) is carried out under the pressure of 0.3 - 8MPa, preferably in the range of 0.3 - 4 MPa.

8. Method according to any one of the preceding claims 1 to 7, **characterised in that** the time interval between step (c4) and step (e) is arbitrary.

9. An apparatus for gasification of waste, particularly household waste, particularly for performing the method according to any one of the preceding claims 1-8, containing
- a charge material feeding unit (1),
- a system for processing waste,
- a module of the electric panel (2), to aid the start-up, the control process of gasification and energy storage,
- a gasifier (7), ash receiver (8) and power generator (9) and/or boiler,
**characterised in that**
it comprises at least one battery (10) for storing unused energy produced in the gasifier (7).
wherein the waste processing system includes a dryer (4) and a compressor (5), used for the granulation and compressing the waste.

10. Apparatus according to claim 9, **characterised in that** the waste processing system includes shredder (3) for pre-shredding of waste.

11. Apparatus according to claim 9 or 10, **characterised in that** it has a battery (10) of variable capacity.
